# EUROPEAN PATENT APPLICATION

(11) **EP 4 797 373 A1**
(43) Date of publication of application: **26.08.2026**
(21) Application number: 25227469.1
(22) Date of filing: 29.12.2025
(51) Int. Cl.: H01M 10/42, H01M 10/48, H01M 50/271, H01M 50/502, H01M 50/296

(54) **BATTERY ASSEMBLY FOR INDUSTRIAL MACHINERY**

(30) Priority: 20.02.2025 IT 202500003315
(71) Applicant: Futura Batterie S.r.l., 37040 Zimella (VR) (IT)
(72) Inventor: TERAZZAN, Yari, I-37040 Zimella (VR) (IT)
(74) Representative: De Bortoli, Eros

(57) **Abstract**

Battery assembly for industrial machinery, characterized by comprising:
- a battery pack comprising one or more battery cells;
- a containment tank housing said battery pack;
- a closing lid for said containment tank;
- a plurality of first power connectors fixed to said closing lid and electrically connected to the battery cells of said battery pack;
- an electronic unit suitable for controlling the operation of said battery pack;
- a plurality of second power connectors fixed to the containment casing of said electronic unit and electrically connected to power circuits (51) of said electronic unit;
- first reversible electrical connection means for electrically connecting, in a removable manner, said first power connectors to said second power connectors;
- first reversible fastening means for removably fixing the containment casing of said electronic unit to said closing lid.

## Description

The present invention relates to a battery assembly for industrial machinery, for example forklifts, industrial cleaners, machine tools, electric cranes, Automated Guided Vehicles (AGVs), and so forth.

As is known, a battery assembly (for example including lithium batteries) for industrial machinery comprises a battery pack including a plurality of battery cells electrically connected to each other in series and/or in parallel and an electronic power and control unit intended to control the operation of the aforesaid battery pack.

In currently available battery assemblies for industrial machinery, the replacement of the electronic unit is particularly laborious to perform in the field. In many cases, in view of the complexity of the replacement operation, it is preferable to replace the entire battery assembly, if malfunctioning of the electronic unit occurs.

Evidently, these problems can cause a considerable increase in the times and costs required for any maintenance operations.

There is a strong need in the market for innovative solutions that overcome or mitigate the limitations of the art illustrated above.

The present invention aims to meet this need by providing a battery assembly for industrial machinery, according to the following claim 1 and the related dependent claims.

The battery assembly, according to the present invention, is characterized by a highly modular structure in the which the battery pack and the electronic unit form distinct modules that can be produced separately during manufacture of the battery assembly.

These modules can be easily electrically and mechanically coupled to and uncoupled from each other, in a removable manner, during installation of the battery assembly or during a maintenance operation in the field.

On the one hand, this solution simplifies and rationalizes the production process of the battery assembly with consequent reduction of production times and costs.

On the other hand, each of the aforesaid modules can be replaced, in particular the electronic power and control unit, in a simple and rapid manner and, above all, without the need to act on the remaining parts of the battery assembly. Naturally, this greatly reduces times and costs of any maintenance operations.

In a further aspect thereof, the present invention refers to a battery box for industrial machinery comprising a battery assembly, according to the present invention.

In a further aspect thereof, the present invention also refers to industrial machinery, for example a forklift, an industrial cleaner, a machine tool, an electric crane, an AGV, and so forth, comprising a battery assembly or a battery box, according to the present invention.

Further features and advantages of the present invention will be more apparent from a more detailed description of the present invention, illustrated by way of non-limiting example in the accompanying figures, wherein:
- Figs. 1-3 schematically illustrate the battery assembly, according to the present invention;
- Fig. 4 schematically illustrates a battery box for industrial machinery including the battery assembly, according to the present invention;
- Figs. 5-6 schematically illustrate an embodiment of the battery box of Fig. 4, which is particularly suitable for use in industrial machinery such as forklifts or machinery of similar type.

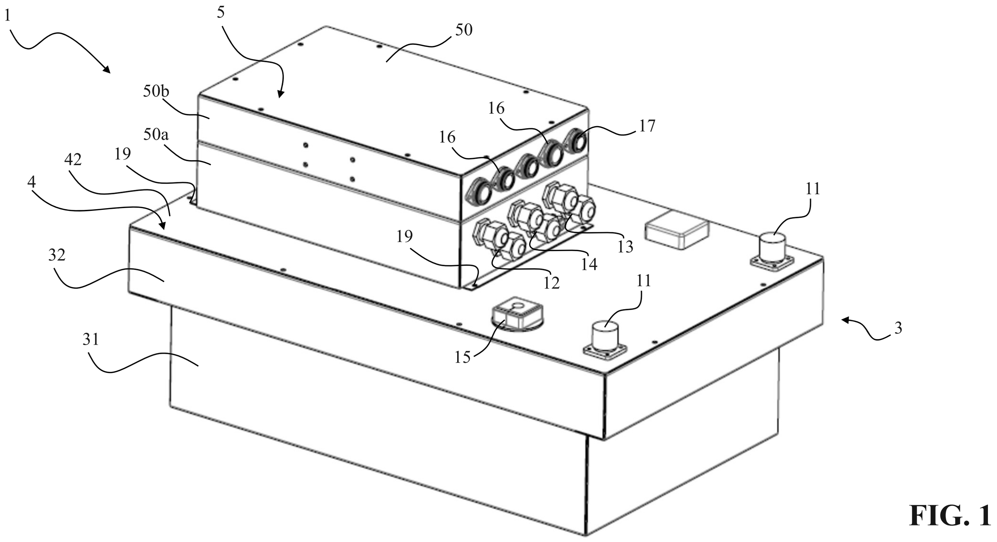

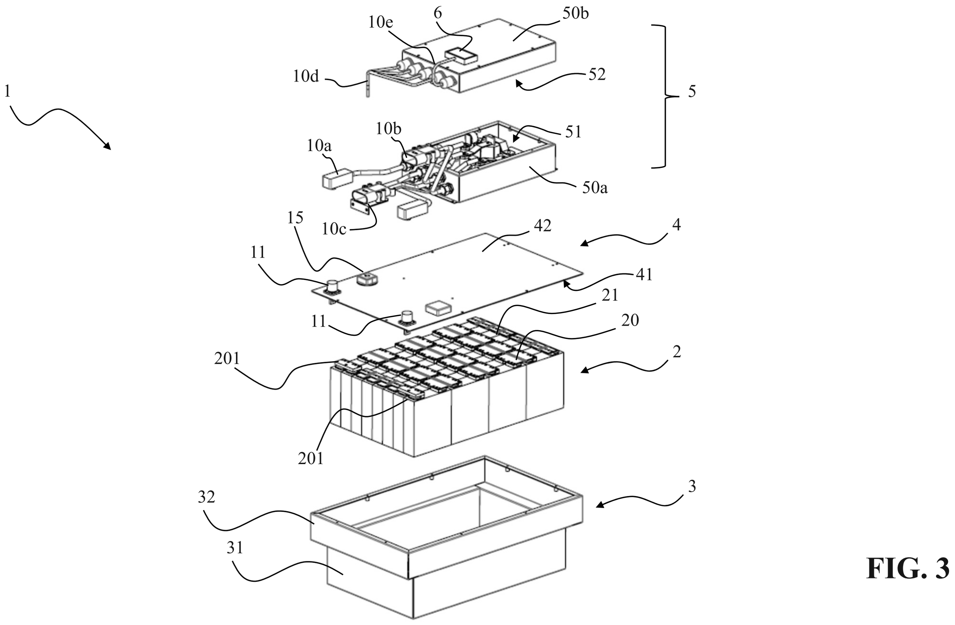

With reference to the accompanying figures, in particular to Figs. 1-3, the present invention refers to a battery assembly 1 for industrial machinery, for example forklifts, industrial cleaners, machine tools, electric cranes AGVs, and so forth.

According to the present invention, the battery assembly 1 comprises a battery pack 2 including a plurality of battery cells 20 electrically connected to each other (in series and/or parallel).

In principle, the battery cells 20 can be of any known type suitable for the use, for example lead batteries, lithium batteries and so forth. Preferably, however, the battery cells 20 are new generation batteries, lighter, smaller and with higher performance from an electrical viewpoint (for example lithium, lithium ion, and similar battery cells).

Advantageously, the battery pack 2 comprises at least one pair of power terminals 201 through which an electrical current can flow, for example intended to charge the battery cells 20 during a charging process thereof, or to power an electrical load (for example the electrical or electromechanical components of industrial machinery), during normal operation of the battery assembly.

Preferably, the battery pack 2 further comprises one or more sensors 21 suitable for detecting one or more physical quantities related to the operation of the battery pack. In this case, the battery pack 2 advantageously also comprises one or more signal terminals (not illustrated) through which the detection signals supplied by the sensors 21 are transmitted. The sensors 21 can, for example, comprises one or more current and/or temperature sensors.

In general, the battery pack 2 can be produced according to known solutions, which will not be described below in greater detail for evident reasons of brevity of exposition.

According to the present invention, the battery assembly 1 comprises a containment tank 3 intended to house the battery pack 2 and a closing lid 4 for said containment tank.

The containment tank 3 and the closing lid 4 can be made of metal or another material suitable for the purpose.

According to the embodiments illustrated in the aforesaid figures, the containment tank 3 comprises a lower area 31, in which the battery pack 2 is housed, and an upper bounding frame 32.

Per the purposes of the present invention, the terms "upper", "lower", "length", "width", "height", "vertical", "horizontal", "lateral" and in general the related geometric and dimensional terms used in the description and in the claims, must be understood as referring to the normal installation conditions of the battery assembly, according to the present invention, for example when mounted on industrial machinery (Figs. 1-2, 4).

Preferably, the lower housing area 31 of the containment tank 3 has dimensions, in length and width, that are smaller than the corresponding dimensions, in length and width, of the upper bounding frame 32.

Preferably, the lower area 31 of the containment tank 3, in which the battery cells 20 are housed, has dimensions in length and width smaller than the corresponding dimensions in length and width of the upper frame 32.

In practice, the lower area 31 has dimensions substantially corresponding to the battery pack 2 so as to guarantee its stable positioning inside the containment tank 3, without having to use stabilizing shims.

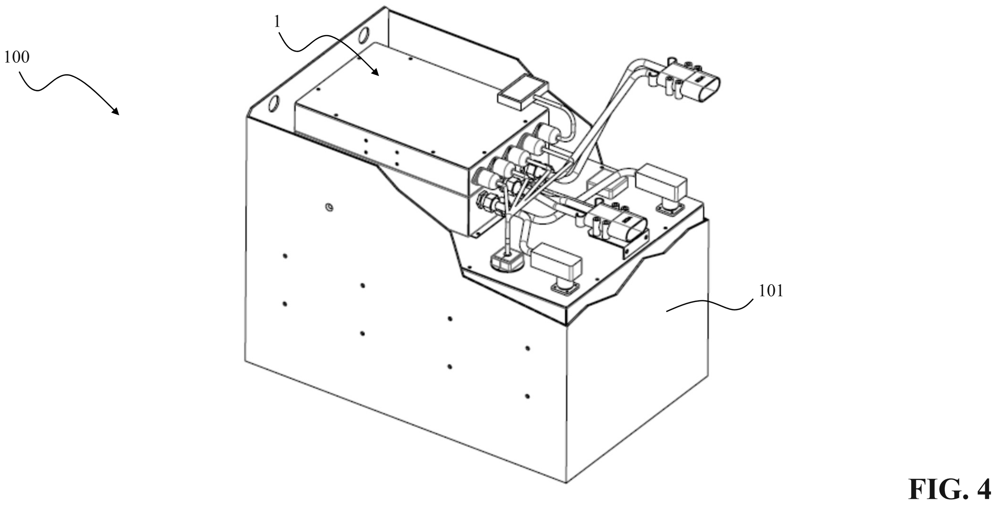

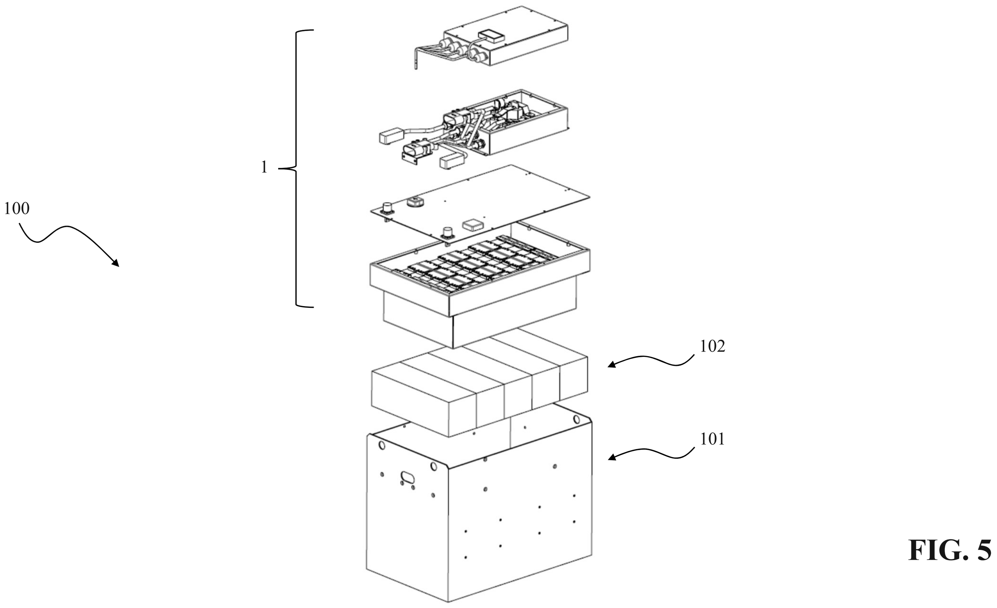

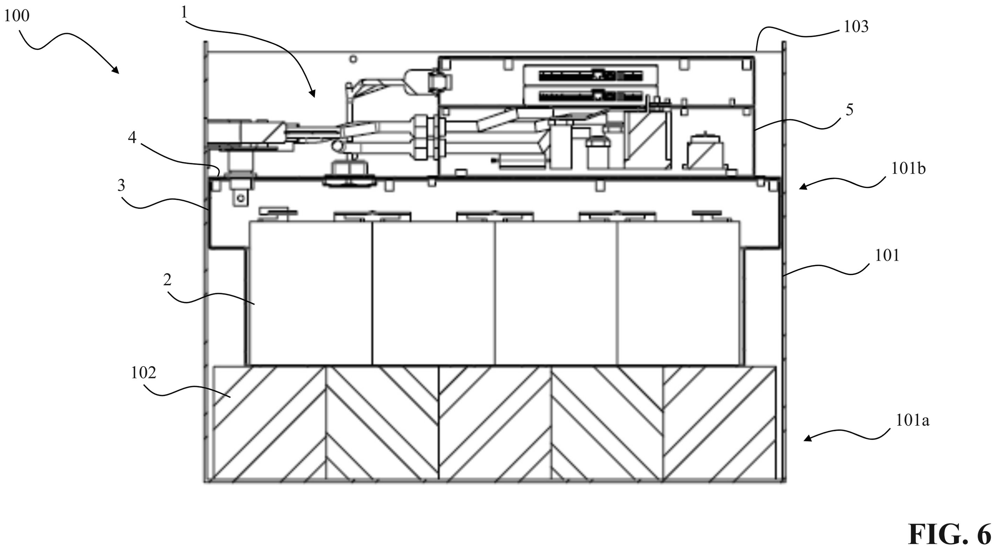

Preferably, with reference also to Figs. 4-6, the dimensions, in length and width, of the upper frame 32 are substantially the same as the corresponding inner dimensions, in length and width, of the upper portion of a possible containment structure (reference 101 - Figs. 4-6) intended to house the battery assembly. In this way, when the battery assembly is inserted into the aforesaid containment structure, the upper bounding frame 32 rests substantially against the inner walls of the containment structure. In practice, the upper frame 32 has substantially the same dimensions as the inner space of the aforesaid containment structure so as to be able to be stably positioned therein.

According to the embodiments illustrated in the aforesaid figures, the lid 4 is arranged so as to close the containment tank 3 at the top and define a support surface for further components of the battery assembly (for example, an electronic power and control unit 5).

Preferably, the lid 4 comprises a lower surface 41 and an upper surface 42 opposite each other. The lower surface 41 faces the inner volume of the containment tank 3 while the upper surface 42 faces the outside of the containment tank 3.

According to the embodiments illustrated in the aforesaid figures, the lid 4 is positioned resting against a horizontal upper edge of the containment tank 3, which extends along the entire perimeter of the lower area 31 in a direction substantially perpendicular to the walls thereof, toward the outside of the containment tank.

In this way, the lid 4 can be easily fixed to the upper frame 32 of the containment tank, preferably through reversible fastening means, for example screws, clips, reversible snap-on couplings, and the like.

However, embodiments in which the containment tank 3 and the lid 4 are produced according to solutions of different type are also possible. For example, the containment tank 3 could have the shape of a parallelepiped open at the top, advantageously with dimensions in width and length corresponding to those of the battery pack 2 (and advantageously greater in height). In this case, the lid 4 can simply be positioned resting on an upper edge of the containment tank 3 so as to close it and define a support surface for further components of the battery assembly. Also in this case, the lid 4 can be fixed to the upper edge of the containment tank 3, preferably through reversible fastening means.

In general, the containment tank 3 and the lid 4 can be produced according to known solutions, which will not be described in further detail below for obvious reasons of brevity of exposition. According to the present invention, the battery assembly 1 comprises an electronic power and control unit 5 structured to control the operation of the battery pack 2, in particular adjusting the input power flow or an outlet of the aforesaid battery pack.

The electronic unit 5 comprises power circuits 51 and control circuits 52 operatively coupled to each other. These electronic circuits and their operating principles are not described in detail herein, given than they are normally of conventional type and, in any case, can be of any type, according to needs.

The electronic unit 5 comprises a containment casing 50 defining an inner volume in which the aforesaid electronic circuits 51, 52 are housed.

The containment casing 50 can be made of metal or another material suitable for the purpose. Preferably, the containment casing 50 includes a first portion 50a defining a first section of the electronic unit 5 in which the power circuits 51 are housed, and a second portion 50b defining a second section of the electronic unit 5 in which the control circuits 52 are housed. According to the embodiments illustrated in the aforesaid figures, the first portion 50a of the containment casing 50 is box shaped, open at the top, and is arranged below the second portion 50b, which is instead boxed shaped and closed by a lid. The second portion 50b closes the first portion 50a at the top.

Preferably, the portions 50a, 50b of the containment casing 50 are joined to each other through reversible fastening means, for example screws, clips, reversible snap-on couplings and similar means. This greatly aids the industrial assembly of the electronic unit 5 and significantly facilitates the inspection of each section of the electronic unit on the field.

However, embodiments in which the electronic unit 5 is produced according to solutions of different type are also possible. For example, the electronic circuits 51, 52 could be positioned differently with respect to what is illustrated in the aforesaid figures and the containment casing 50 could be made in a single body, without being divided into distinct portions, superimposed and joined to each other.

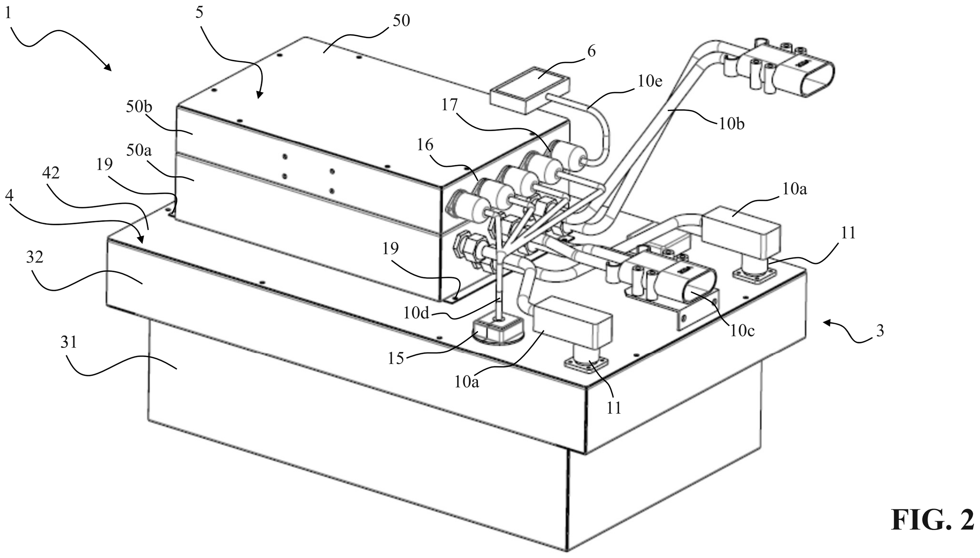

Preferably, the battery assembly 1 comprises a user interface unit 6 (Fig 2) operatively coupled to the electronic unit 5 to allow a user to interact with said electronic unit. For example, the user interface unit 6 can comprise a display (preferably of touch-screen type) for viewing information useful for the user and arranged to allow a user to send commands to the control circuits 52 of the electronic unit 5.

A particular feature of the battery assembly, according to the present invention, consists in that it has an overall modular structure, in which the electronic unit 5 (which forms a separate module) is operatively coupled to the assembly including the battery pack 2, the containment tank 3 and the lid 4 (which forms a further separate module), in a removable manner, both electrically and mechanically.

In this way, the electronic unit 5 can be easily removed from the battery assembly, or installed thereon, without the need to take action on the remaining parts thereof. Naturally, this facilitates installation and maintenance of the battery assembly in the field, in particular possible actions on the electronic unit 5 or replacement thereof, in case of need.

According to the present invention, the electronic power and control unit 5 is mechanically coupled in a removable manner to the lid 4 at the upper surface 42 thereof.

To this end, the battery assembly 1 advantageously comprises reversible fastening means 19 that removably fix the containment casing 50 of the electronic unit 5 to the closing lid 4, at the upper surface 42 thereof.

In the embodiment illustrated, the fastening means 19 include screws inserted into corresponding holes, slots or seats produced in the lid 4 and in the containment casing 50 of the electronic unit 5. Naturally, alternative solutions that ensure removable mechanical coupling between the electronic unit 5 and the lid 4, at the upper surface 42 thereof, are also possible. For example, the fastening means 19 could include clips, reversible snap-fit couplings, and the like.

According to the present invention, the electronic power and control unit 5 is electrically connected, in a removable manner, to the battery cells 20 of the battery pack 2 housed in the containment tank 3.

To this end, the battery assembly 1 comprises (Figs. 2-3):
- a pair of first power connectors 11, fixed to the closing lid 4 and electrically connected to the battery cells 20 of the battery pack 2; and
- a pair of second power connectors 12, fixed to the containment casing 50 of the electronic unit 5 and electrically connected to the power circuits 51 of the aforesaid electronic unit; and
- first reversible electrical connection means 10a that electrically connect, in a removable manner, the first power connectors 11 and the second power connectors 12.

According to the embodiments illustrated in the aforesaid figures, each first power connector 11 consists of an electrode that passes perpendicularly through the thickness of the lid 4 so as to protrude with respect to the opposite surfaces of said lid. Each electrode 11 comprises an end that protrudes from the lower surface 41 of the lid 4, into the inner volume of the containment tank 3, and is electrically connected, according to conventional methods, to the power terminals of the battery pack 2. Each electrode 11 further comprises an opposite end to the previous one, which protrudes from the upper surface 42 of the lid 4, towards the outside of the containment tank 3, and which can be electrically connected to a second connector 12 provided at the electronic unit 5, through first electrical connection means 10a.

However, embodiments in which the first power connectors 11 are produced according to different solutions, for example in the form of an electrical power plug or socket, are also possible.

According to the embodiments illustrated in the aforesaid figures, each second power connector 12 consists of an electrode that passes perpendicularly through the thickness of the containment casing 50 (preferably of the lower portion 50a) of the electronic unit 5 so as to protrude with respect to the inner and outer surfaces of said casing. Each electrode comprises an end that protrudes from the inner surface of the casing 50, into the inner volume of the electronic unit 5, and is electrically connected, according to conventional methods, to the power circuits 51 of the electronic unit 5. Each electrode further comprises an end opposite the previous one, which protrudes from the outer surface of the casing 50 and which can be electrically connected to a corresponding first power connector 11 through the first electrical connection means 10a. However, embodiments in which the second power electrodes 12 are produced according to different solutions, for example in the form of an electrical power plug or socket, are also possible.

According to the embodiments illustrated in the aforesaid figures, the electrical connection means 10a comprise a pair of electrical power cables, each of which is arranged so as to electrically connect, in a removable manner, a first power connector 11, arranged at the lid 4, and a corresponding second power connector 12, arranged at the electronic unit 5.

However, embodiments in which the first reversible electrical connection means 10a are produced according to different solutions are also possible. For example, they can comprise busbars arranged so as to allow a reversible electrical connection between the power connectors 11, 12.

Preferably, the electronic power and control unit 5 is electrically connectable, in a removable manner, to an electrical power source (not illustrated) suitable for supplying electrical power to charge the battery cells 20 of the battery pack 2. This electrical power source can, for example, be an electric power distribution network.

Preferably, the battery assembly 1 comprises (Figs. 2-3):
- one or more third power connectors 13, fixed to the containment casing 50 of the electronic unit 5 and electrically connected to the power circuits 51 of the aforesaid electronic unit; and
- second reversible electrical connection means 10b electrically connecting, in a removable manner, the third power connectors 13 with the power source.

Preferably, the battery assembly 1 comprises a pair of power connectors 13.

According to the embodiments illustrated in the aforesaid figures, each third power connector 13 consists of an electrode that passes perpendicularly through the thickness of the containment casing 50 (preferably of the lower portion 50a) of the electronic unit 5 so as to protrude with respect to the inner and outer surfaces of said casing. This electrode comprises an end that protrudes from the inner surface of the casing 50, into the inner volume of the electronic unit 5, and is electrically connected, according to conventional methods, to the power circuits 51 of the electronic unit 5. This electrode further comprises an end opposite the previous one, which protrudes from the outer surface of the casing 50 and which can be electrically connected to the power source, through the second electrical connection means 10b.

However, embodiments in which the third power electrodes 13 are produced according to different solutions, for example in the form of an electrical power plug or socket, are also possible.

According to the embodiments illustrated in the aforesaid figures, the second electrical connection means 10b comprise a pair of electrical power cables, each of which has an end intended to be connected, in a removable manner, to a corresponding second power connector 12. At an opposite end of the aforesaid electrical power cables, the second electrical connection means 10b comprise an electrical power socket, which can comprise distinct electrode assemblies, each of which electrically connected to a corresponding electrical power cable. However, other embodiments in which the second reversible electrical connection means 10b are produced according to different solutions are also possible. For example, they can comprise distinct electrical power cables or busbars shaped so as to allows electrical connection with the power source.

Preferably, the electronic power and control unit 5 is electrically connectable, in a removable manner, to a power interface (not illustrated) of industrial machinery powered by the battery cells 20 of the battery pack 2.

Preferably, the battery assembly 1 comprises (Figs. 2-3):
- one or more fourth power connectors 14, fixed to the containment casing 50 of the electronic unit 5 and electrically connected to the power circuits 51 of the aforesaid electronic unit; and
- third reversible electrical connection means 10c suitable for electrically connecting, in a removable manner, the fourth power connectors 14 with the power interface of the industrial machinery.

Preferably, the battery assembly 1 comprises a pair of power connectors 14.

According to the embodiments illustrated in the aforesaid figures, each fourth power connector 14 consists of an electrode that passes perpendicularly through the thickness of the containment casing 50 (preferably of the lower portion 50a) of the electronic unit 5 so as to protrude with respect to the inner and outer surfaces of said casing. This electrode comprises an end that protrudes from the inner surface of the casing 50, into the inner volume of the electronic unit 5, and is electrically connected, according to conventional methods, to the power circuits 51 of the electronic unit 5. This electrode further comprises an end opposite the previous one, which protrudes from the outer surface of the casing 50 and which can be electrically connected to the power interface of the industrial machinery, through the third electrical connection means 10c. However, embodiments in which the third power electrodes 13 are produced according to different solutions, for example in the form of an electrical power plug or socket, are also possible.

According to the embodiments illustrated in the aforesaid figures, the third reversible electrical connection means 10c comprise a pair of electrical power cables, each of which has one end intended to be connected to a corresponding fourth power connector 14. At an opposite end of the aforesaid electrical power cables, the third reversible electrical connection means 10c comprise an electrical power socket, which can comprise distinct electrode assemblies, each of which electrically connected to a corresponding electrical power cable.

However, other embodiments in which the third reversible electrical connection means 10c are produced according to different solutions are also possible. For example, they can comprise distinct electrical power cables or busbars shaped so as to allow electrical connection with the power source.

Preferably, the electronic power and control unit 5 is electrically connectable, in a removable manner, to the sensors 21 of the battery pack 2 housed in the containment tank 3.

To this end, the battery assembly 1 comprises (Figs. 2-3):
- one or more first signal connectors 15, fixed to the closing lid 4 and electrically connected to the sensors 21 of the battery pack 2; and
- one or more second signal connectors 16, fixed to the containment casing 50 of the electronic unit 5 and electrically connected to the control circuits 52 of the aforesaid electronic unit; and
- fourth reversible electrical connection means 10d electrically connecting, in a removable manner, the first signal connectors 15 and the second signal connectors 16.

Preferably, the battery assembly 1 comprises a single first signal connector 15 and a plurality of second signal connectors 16, as illustrated in the aforesaid figures.

According to the embodiments illustrated in the aforesaid figures, the first signal connector 15 includes an electrical plug comprising a plurality of electrodes that pass perpendicularly through the thickness of the lid 4 so as to protrude with respect to the opposite surface of said lid. Each electrode comprises an end that protrudes from the lower surface 41 of the lid 4, into the inner volume of the containment tank 3, and is electrically connected, according to conventional methods, to a corresponding sensor 21. Each electrode further comprises an end opposite the previous one, which protrudes from the upper surface 42 of the lid 4, toward the outside of the containment tank 3, and which can be electrically connected to a corresponding signal connector 16 arranged at the electronic unit 5, through the fourth electrical connection means 10d.

However, embodiments in which each first signal connector 15 is produced according to different solutions, for example in the form of signal socket, are also possible.

According to the embodiments illustrated in the aforesaid figures, each second signal connector 16 consists of an electrode that passes perpendicularly through the thickness of the containment casing 50 (preferably of the upper portion 50b) of the electronic unit 5 so as to protrude with respect to the inner and outer surfaces of said casing. This electrode comprises an end that protrudes from the inner surface of the casing, into the inner volume of the electronic unit 5, and is electrically connected, according to conventional methods, to the control circuits 52 of the electronic unit 5. This electrode further comprises an end opposite the previous one, which protrudes from the outer surface of the casing 50 and which can be electrically connected to the first signal connector 15 arranged at the lid 4, through the fourth electrical connection means 10d.

However, embodiments in which the second signal connectors 16 are produced according to different solutions, for example in the form of an electrical power plug or socket, are also possible.

According to the embodiments illustrated in the aforesaid figures, the fourth electrical connection means 10d comprise an electrical cable comprising a plurality of conductors, each of which is arranged so as to electrically connect, in a removable manner, a first signal connector 15 with a corresponding second signal connector 16.

However, embodiments in which the fourth electrical connection means 10d are produced according to different solutions are also possible. For example, if a plurality of first signal connectors 15 are provided, the fourth electrical connection means 10d could include distinct signal cables, each of which connected to a pair of corresponding first and second signal connectors 15, 16.

Preferably, the electronic power and control unit 5 is electrically connectable, in a removable manner, to the user interface unit 6 suitable for allowing a user to interact with the aforesaid electronic unit.

Preferably, the battery assembly 1 comprises (Figs. 2-3):
- one or more third signal connectors 17, fixed to the containment casing 50 of the electronic unit 5 and electrically connected to the control circuits 52 of the aforesaid electronic unit; and
- fifth reversible electrical connection means 10e suitable for electrically connecting, in a removable manner, the third signal connectors 17 with the user interface unit 6.

Preferably, the battery assembly 1 comprises a single third signal connector 17.

According to the embodiments illustrated in the aforesaid figures, each third signal connector 17 consists of an electrode that passes perpendicularly through the thickness of the containment casing 50 (preferably of the upper portion 50b) of the electronic unit 5 so as to protrude with respect to the inner and outer surface of said casing. This electrode comprises an end that protrudes from the inner surface of the casing 50, into the inner volume of the electronic unit 5, and is electrically connected, according to conventional methods, to the control circuits 52 of the electronic unit 5. This electrode further comprises an end opposite the previous one, which protrudes from the outer surface of the casing 50 and which can be electrically connected to the user interface unit 6, through the fifth electrical connection means 10e.

However, embodiments in which the third signal electrodes 17 are produced according to different solutions, for example in the form of an electrical power plug or socket, are also possible.

According to the embodiments illustrated in the aforesaid figures, the fifth electrical connection means 10b comprise a signal cable connected to the corresponding third signal connector 17.

However, embodiments in which the fifth electrical connection means 10e are produced according to different solutions are also possible. For example, if a plurality of third signal connectors 17 are provided, the fifth electrical connection means 10e could include distinct signal cables, each of which connected to a corresponding third signal connector and to the user interface unit 6.

In a further aspect thereof, the present invention refers to a battery box 100 comprising a battery assembly 1, according to the present invention.

In a general embodiment, the battery box 100 comprises a containment structure 101 suitable for housing, at least partially, a battery assembly 1, according to the present invention.

The containment structure 101 can be arranged to be positioned in the vicinity of machinery, or to be mounted thereon, in order to supply the electrical power required for the operation of said machinery.

Preferably, the containment structure 101 is substantially parallelepiped shaped and is generally made of metal.

Preferably, the battery box 100 comprises fastening means (not illustrated) for fixing the containment tank 3 of the battery assembly 1 to the containment structure 101. These fastening means can be of reversible type, for example screws or similar means, or of non-reversible type, such as rivets or welds or similar means.

In the embodiments illustrated in the aforesaid figures, the fastening means are arranged so as to fix the upper bounding frame 32 of the containment tank to the lateral walls of the containment structure 101.

In some applications, for example when installed on a forklift, the containment structure 101 can be arranged to perform a function of counterweight, according to known methods that will not be described in detail. In these cases, the battery box 100 can advantageously comprise a ballast 102 housed in the containment structure.

Preferably, the containment structure comprises a lower section 101a, in which the ballast 102 is positioned, and an upper section 101b, in which the battery assembly 1 is positioned. In practice, the ballast 102 is positioned in the base of the containment structure 101 while the battery assembly 1 is placed above the ballast with the related containment tank 3 fixed to the lateral walls of the containment structure.

The ballast 102 comprises a material selected from waste materials from metalworking, for example metalworking chips and/or welding scraps and/or generic metal waste and/or similar materials.

These materials can be inserted into the base of the containment structure 101 in loose form or in compressed or compacted form, as a function of their characteristics. Alternatively, or additionally, the material forming the ballast 102 can comprise semi-finished metal products, for example metal billets or slabs, of suitable shapes and sizes.

In practice, as a function of the operating requirements (for example, weight of the ballast required to ensure the stability of the machinery; volume available inside the containment structure) and of the costs of the material, it is possible to select type and amount of the most suitable materials among those listed and position it inside the containment structure 101, at its base, to obtain a ballast 2 that satisfies the requirements of minimum weight that the battery box 100 must have with relatively low costs.

According to some embodiments (not illustrated), a separation surface, for example a metal surface, can be provided to divide the lower section 101a of the containment structure 101 from the upper section 101b of said containment structure. The aforesaid separation surface can be provided in the case in which the ballast 102 consists of waste metal or loose materials (chips, scraps and the like) that are not compressed or not compacted into a single mass so as to prevent the movement of the ballast 2 during any movement of the industrial machinery. It can be arranged to act as support base for the battery assembly 1 so that the weight thereof is adequately distributed and uniformly transferred to the base of the containment structure.

Preferably, the battery box 100 comprises a protective lid 103 intended to close the top of the containment structure 101.

It has thus been seen how the battery assembly 1, according to present invention, offers significant advantages with respect to solutions of the prior art.

The battery assembly 1 has a modular structure in which the electronic unit 5 and the assembly formed by the battery pack 2, by the containment tank 3 and by the lid 4 form distinct structural/functional modules that can be coupled to each other, mechanically and electrically, in a removable manner.

The solution proposed by the present invention greatly facilitates the industrial production and installation of the battery assembly. The battery assembly can be assembled directly in the field as the aforesaid distinct modules to be operatively coupled have been industrially manufactured separately.

Above all, the solution proposed by the present invention facilitates maintenance of the battery assembly. For example, the electronic unit 5 can be easily replaced in the field to carry out retrofitting operations requiring its replacement, without the need to act on the remaining components of the battery assembly. Similarly, also the assembly formed by the battery pack 2, by the containment tank 3 and by the lid 4 can be easily replaced or action can be taken thereon, for example to replace the battery pack.

The battery assembly 1 is relatively simple to produce on an industrial scale, at competitive costs with respect to prior art solutions.

## Claims

1. Battery assembly (1) for industrial machinery comprising:
- a battery pack (2) comprising a plurality of battery cells (20) electrically connected to each other;
- a containment tank (3) housing said battery pack (2);
- a closing lid (4) for said containment tank;
- an electronic power and control unit (5) structured to control the operation of said battery pack (2), wherein said electronic unit comprises one or more power circuits (51), one or more control circuits (52) operatively coupled to said power circuits and a containment casing (50) structured to house said power circuits and said control circuits;
**characterized in that** it includes:
- reversible fastening means (19) structured to fix, in a removable manner, the containment casing (50) of said electronic unit to said closing lid (4).
- a plurality of first power connectors (11) fixed to said closing lid (4) and electrically connected to the battery cells (20) of said battery pack;
- a plurality of second power connectors (12) fixed to the containment casing (50) of said electronic unit (5) and electrically connected to the power circuits (51) of said electronic unit;
- first reversible electrical connection means (10a) structured to electrically connect, in a removable manner, said first power connectors (11) to said second power connectors (12).

2. Battery assembly, according to claim 1, **characterized in that** it comprises one or more third power connectors (13) fixed to the containment casing (50) of said electronic unit (5) and electrically connected to the power circuits (51) of said electronic unit, wherein said battery assembly comprises second reversible electrical connection means (10b) structured to electrically connect, in a removable manner, said third power connectors (13) to an electrical power source supplying electrical power to charge the battery cells (20) of said battery pack.

3. Battery assembly, according to one of the preceding claims, **characterized in that** it comprises one or more fourth power connectors (14) fixed to the containment casing (50) of said electronic unit (5) and electrically connected to the power circuits (51) of said electronic unit, wherein said battery assembly comprises third reversible electrical connection means (10c) structured to electrically connect, in a removable manner, said fourth power connectors (14) to a power interface of industrial machinery powered by the battery cells (20) of said battery pack.

4. Battery assembly, according to one of the preceding claims, **characterized in that** said battery pack (2) comprises one or more sensors (21) structured to detect one or more physical quantities relating to the operation of said battery pack, wherein said battery assembly comprises:
- one or more first signal connectors (15) fixed to said closing lid (4) and electrically connected to the sensors (21) of said battery pack;
- one or more second signal connectors (16) fixed to the containment casing (50) of said electronic unit (5) and electrically connected to the control circuits (52) of said electronic unit;
- fourth reversible electrical connection means (10d) structured to electrically connect, in a removable manner, said first signal connectors (15) with said second signal connectors (16).

5. Battery assembly, according to one of the preceding claims, **characterized in that** it comprises a user interface (6) operatively coupled to said electronic unit (5) to allow a user to interact with said electronic unit, wherein said battery assembly comprises:
- one or more third signal connectors (17) fixed to the containment casing (50) of said electronic unit and electrically connected to the control circuits (52) of said electronic unit;
- fifth reversible electrical connection means (10e) structured to electrically connect, in a removable manner, said third signal connectors (17) with said user interface unit (53).

6. Battery box (100) for industrial machinery **characterized in that** it comprises a battery assembly (1), according to one of the preceding claims.

7. Battery box, according to claim 6, **characterized in that** it comprises a containment structure (101) structured to house, at least partially, said battery assembly (1).

8. Battery box, according to claim 7, **characterized in that** it comprises a ballast (102) housed in said containment structure (101).

9. Industrial machinery, **characterized in that** it comprises a battery assembly (1), according to one of claims 1 to 5.

10. Industrial machinery, **characterized in that** it comprises a battery box (100), according to one of claims 6 to 8.

11. Industrial machinery, according to claims 9 or 10, **characterized in that** it is a forklift or an industrial cleaner.
